**Europäisches Patentamt**

**European Patent Office**

**Office européen des brevets**

(19)

(11) Veröffentlichungsnummer: **0 024 742**
**B1**

(12) ## EUROPÄISCHE PATENTSCHRIFT

(45) Veröffentlichungstag der Patentschrift:
08.05.85

(21) Anmeldenummer: **80105213.5**

(22) Anmeldetag: **02.09.80**

(51) Int. Cl.⁴: **G 01 F 9/00, G 01 F 1/38**

(54) Einrichtung zum Anzeigen des momentanen Kraftstoffverbrauchs eines Kraftfahrzeugs.

(30) Priorität: **03.09.79 DE 2935560**

(43) Veröffentlichungstag der Anmeldung:
**11.03.81 Patentblatt 81/10**

(45) Bekanntmachung des Hinweises auf die Patenterteilung:
**08.05.85 Patentblatt 85/19**

(84) Benannte Vertragsstaaten:
**FR GB NL SE**

(56) Entgegenhaltungen:
**DE - A - 2 731 065**
**DE - B - 1 031 980**
**FR - A - 2 441 835**

(73) Patentinhaber: **VDO Adolf Schindling AG,
Gräfstrasse 103, D-6000 Frankfurt/Main (DE)**

(72) Erfinder: **Schlick, Horst, Sachsenstrasse 27,
D-6231 Schwalbach (DE)**

(74) Vertreter: **Könekamp, Herbert, Dipl.-Ing., Sodener
Strasse 9, D-6231 Schwalbach (DE)**

Anmerkung  Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung bezieht sich auf eine Einrichtung zum Anzeigen des momentanen Kraftstoffverbrauchs eines Kraftfahrzeugs mit einem Ottomotor, mit einem Druckmeßwerk, das eine an das Ansaugrohr des Motors angeschlossene Druckkammer aufweist, und Mitteln zum Wirksamschalten des Druckmeßwerks im direkten Gang.

Zur Anzeige des momemtanen Kraftstoffverbrauchs ist eine Einrichtung mit einem Druckmeßwerk bekannt, mit dem der im Ansaugrohr auftretende Unterdruck gemessen und als Verbrauch pro Zeiteinheit angezeigt wird. Da im allgemeinen jedoch eine Anzeige des Verbrauchs pro Wegstreckeneinheit, also beispielsweise Liter pro Hundert Kilometer, gewünscht wird, dieser auf die Wegstrecke bezogene Verbrauch aber bei Messung lediglich des Unterdrucks im Ansaugrohr von der jeweils gewählten Getriebeübersetzung, d. h., dem jeweils eingelegten Gang abhängt, ist bereits vorgeschlagen worden, für die verschiedenen Gänge verschiedene Skalierungen auf der Skala der Anzeigeeinrichtung vorzusehen. Nachteilig ist hierbei, daß einerseits durch die in den unteren Gängen kurzzeitig auftretenden hohen Verbrauchswerte die Ablesbarkeit des Anzeigeinstruments erheblich zu wünschen übrig läßt, das Anzeigeinstrument insbesondere nicht rasch, mit einem kurzen Blick ablesbar ist, eine Forderung, die in der Kraftfahrzeuginstrumentierung unabdingbar ist.

Zur Beseitigung dieses Nachteils ist bereits eine Einrichtung vorgeschlagen worden (DE-A-2 731 065), bei der das Druckmeßwerk über ein Absperrventil mit dem Ansaugrohr verbunden ist und dieses Absperrventil beim Einlegen des direkten Gangs öffnet und beim Zurückschalten aus dem direkten Gang in einen der unteren Gänge wieder schließt, so daß also nur im direkten Gang eine Verbrauchsanzeige erfolgt und nur für diesen Gang eine Skalierung vorgesehen werden muß. Ein solches mechanisch über den Gangwählhebel betätigbares Absperrventil ist jedoch verhältnismäßig teuer, nur mit erheblichem Aufwand zu montieren und bringt darüber hinaus den Nachteil mit sich, daß nach Betätigung des Absperrventils eine verhältnismäßig große Zeitverzögerung bis zum Erscheinen der Anzeige vorhanden ist, dies um so mehr, wenn sich, was im allgemeinen der Fall ist, im Anschlußstutzen des Druckmeßwerks eine Drossel zur Dämpfung der Anzeigemittel befindet. Es müssen dann nämlich die Druckkammer des Druckmeßwerks, beispielsweise der Innenraum der Röhrenfeder, und die sich bis zum Absperrventil daran anschließenden Leitungszüge über die Drossel auf Unterdruck gebracht werden.

Diese Nachteile der bekannten Kraftstoffverbrauchsanzeigeeinrichtungen sollen durch die Erfindung überwunden werden. Es ist daher Aufgabe der Erfindung, eine Anzeigeeinrichtung der eingangs beschriebenen Gattung zu schaffen, bei der nach Wirksamschalten des Druckmeßwerks ohne ins Gewicht fallende Zeitverzögerung eine Anzeige erscheint. Zudem soll die Einrichtung möglichst billig und schnell und einfach im Fahrzeug zu montieren sein.

Diese Aufgabe wird ausgehend von einer Einrichtung der eingangs beschriebenen Gattung erfindungsgemäß dadurch gelöst, daß die Mittel zum Wirksamschalten des Druckmeßwerks eine Belüftungsöffnung, die mit der Druckkammer des Druckmessers in Verbindung steht, und ein Klappankerrelais aufweisen, dessen Erregerwicklung zusammen mit einem diese im direkten Gang an eine Betriebsspannung legenden Schalter einen Stromkreis bildet und dessen Anker mit einem Verschlußelement für die Belüftungsöffnung derart zusammenwirkt, daß die Belüftungsöffnung bei Einlegen des direkten Gangs vom Verschlußelement verschlossen wird.

Durch die Anordnung einer verschließbaren Belüftungsöffnung im Bereich der Druckkammer wird erreicht, daß bei Betätigung des Verschlußelements ohne eine störende Zeitverzögerung eine Anzeige in der Anzeigeeinrichtung erscheint bzw. verschwindet, da das gesamte Unterdrucksystem bis an die Stelle der Öffnung auch bei geöffnetem Verschlußelement unter Unterdruck steht. Sobald das Verschlußelement dann die Öffnung verschließt, ist lediglich noch die Druckkammer bzw. bei einem Röhrenfedermanometer der Federinnenraum auf Unterdruck zu bringen, was bei dem kleinen Volumen dieser Räume vergleichsweise rasch geschieht. Ferner wird durch eine solche Anordnung der verschließbaren Öffnung ein besonders montagegünstiger Aufbau erreicht, ist doch lediglich eine einzige Rohrleitung vom Ansaugrohr zur Anzeigeeinrichtung und eine elektrische Leitung vom Klappankerrelais zum Gangwahlhebel zu verlegen. Da handelsübliche Klappankerrelais Verwendung finden können, lassen sich die erfindungsgemäßen Maßnahmen mit einem äußerst geringen Aufwand realisieren.

Besonders kurze Zeitverzögerungswerte zwischen dem Einlegen des direkten Gangs und dem Erscheinen der Anzeige auf der Anzeigeeinrichtung lassen sich erzielen, wenn eine Drossel nahe der Belüftungsöffnung zwischen dieser und dem Ausgangsrohr angeordnet ist. Darüber hinaus besteht bei einer erfindungsgemäß aufgebauten Einrichtung nunmehr die Möglichkeit, eine Drossel mit einem besonders geringen Wirkungsquerschnitt einsetzen zu können. Als besonders zweckmäßig hat es sich erwiesen, eine solche Drossel aus zwei im Abstand zueinander angeordneten Sinterdrosseln aufzubauen, zwischen denen sich eine Quarzsandfüllung definierten Volumens befindet. Hiermit läßt sich eine optimale Anzeigedämpfung erzielen.

Gemäß einer Ausführungsform der Erfindung ist das Verschlußelement für die Belüftungsöffnung in Form eines Stifts ausgebildet, der in einer den Erregerwicklungskern durchsetzenden Bohrung gelagert ist und auf seiner dem Anker abgewandten Ende einen Verschlußkörper trägt.

Ein solcher Aufbau und eine solche Lagerung des Verschlußelements erfüllt auch höchste Ansprüche hinsichtlich Schwingungsempfindlichkeit und Verschlußsicherheit.

Gemäß einer anderen vorteilhaften Ausführungsform trägt der Anker an seinem dem Drehpunkt abgewandten Ende einen Ansatz mit dem Verschlußkörper. Eine solche Ausführungsform ist besonders billig realisierbar, besitzt jedoch nicht die Schwingungsunempfindlichkeit und Schaltsicherheit wie die zuvor beschriebene Ausführungsform, so daß von Fall zu Fall zu entscheiden sein wird, welche der beiden Ausführungsformen zum Tragen kommt.

In einer vorteilhaften Ausführungsform ist das Druckmeßwerk von einem Röhrenfedermanometer gebildet, als Belüftungsöffnung im Stutzen des Röhrenfedermanometers eine in den Druckkanal mündende Bohrung vorgesehen und das Klappankerrelais unmittelbar am Stutzen befestigt. Hierdurch ergibt sich ein besonders kompakter, bauteilarmer und billiger Aufbau.

Die Erfindung sei anhand der Zeichnung, die in zum Teil schematischer Darstellung Ausführungsbeispiele enthält, näher erläutert. Es zeigt

Fig. 1 eine Gesamtansicht der Anzeigeeinrichtung und

Fig. 2 ein Detail der Fig. 1 in einer teilgeschnittenen Seitenansicht.

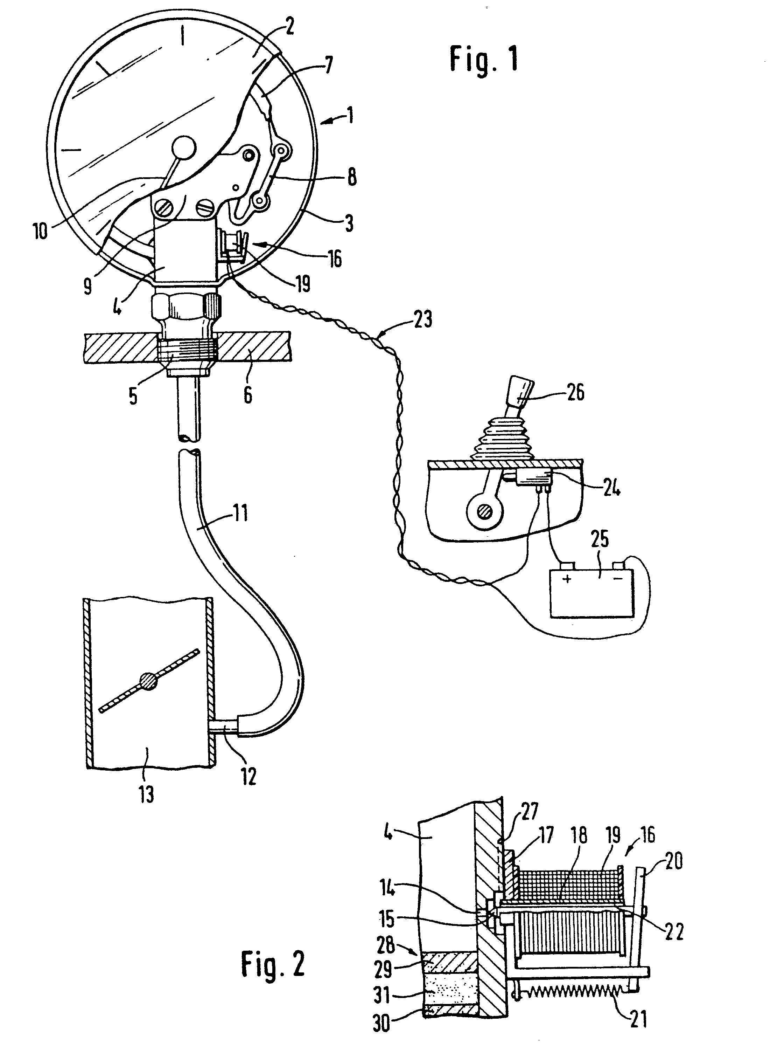

Die Einrichtung zum Anzeigen des momentanen Kraftstoffverbrauchs eines Kraftfahrzeugs enthält, wie aus der Fig. 1 ersichtlich ist, ein Röhrenfedermanometer 1 mit einer Skala 2 zur Anzeige des Verbrauchs in Litern pro hundert Kilometer. Das Röhrenfedermanometer 1 besitzt einen aus dem Gehäuse 3 ragenden Stutzen 4 mit einem Gewindeansatz 5, mit dem das Manometer in eine entsprechende Gewindebohrung in einer Halterung 6 oder dem Armaturenbrett eingeschraubt werden kann. In dem im Gehäuse 3 befindlichen Teil des Gewindestutzens 4 ist die Röhrenfeder 7 eingelötet. Das andere Ende der Röhrenfeder 7 steht über eine Verbindungsstange 8 mit dem Zeigerwerk 9 in Verbindung, dessen Platinen am Stutzen 4 befestigt sind. Auf der Zeigerwelle des Zeigerwerks 9 sitzt der Zeiger 10. Das andere Ende des Stutzens 4 ist über eine flexible Schlauchleitung 11 an einem Stutzen 12 angeschlossen, der am Ansaugrohr 13 des Kraftfahrzeugmotors sitzt.

In der die Röhrenfeder aufnehmenden Seitenwand gegenüberliegenden Seitenwand des Stutzens 4 ist eine Belüftungsbohrung 14 vorhanden, die mittels eines Verschlußelements 15 verschlossen oder freigegeben werden kann. Die Betätigung des Verschlußelements 15 erfolgt durch ein Klappankerrelais 16, des aus einem Joch 17 mit einer auf einem Kern 18 sitzenden Erregerspule 19 und einem Klappanker 20 besteht, der mittels einer Feder 21 in einer Ruhelage gehalten wird. Der Kern 18 ist mit einer Bohrung 22 versehen, durch die das Verschlußelement 15 ragt und in der das Verschlußelement 15 geführt ist. An seinem der Belüftungsbohrung 14 abgewandten Seite ist das Verschlußelement 15 am Anker 20 befestigt.

Die Erregerspule 19 steht über eine zweiadrige Leitung 23 und einen Tastschalter 24 mit der Fahrzeugbatterie 25 in Verbindung. Der Schalter 24 ist im Bereich des Gangwählhebels 26 so angeordnet, daß bei eingelegtem direktem Gang über den Gangwählhebel 26 der Schalter 24 im Sinne eines Schließens betätigt wird. Dies hat einen Stromfluß durch die Erregerwicklung 19 zur Folge, weshalb das Relais erregt und der Anker 20 angezogen wird. Dadurch wird die üblicherweise unverschlossene Öffnung 14 geschlossen und der Unterdruck im Ansaugrohr 13 und der Schlauchleitung 11 kann sich auch in der Rohrfeder aufbauen. Diese wird entsprechend ausgelenkt und verschwenkt über das Zeigerwerk 9 den Zeiger 10 in die dem Unterdruckwert entsprechende Stellung. Sobald der Gangwählhebel 26 aus seiner dem direkten Gang entsprechenden Position, beispielsweise durch Herunterschalten auf einen anderen Gang, entfernt wird, wird der Schalter 24 im Sinne eines Öffnens betätigt, wodurch das Klappankerrelais 16 entregt wird. Der Klappanker 20 wird daher durch die Feder 21 in seine Ruhestellung geklappt und zieht gleichzeitig das Verschlußelement 15 in die in Fig. 2 dargestellte Lage, in der die Belüftungsbohrung 14 über den Kanal 27 mit der Umgebung verbunden ist. In dieser Position des Verschlußelements 15 kann sich in der Röhrenfeder kein Unterdruck aufbauen, weshalb sich diese und der Zeiger 10 in ihrer Ruhelage befinden. Eine Verbrauchsanzeige erfolgt dann nicht mehr.

Wie insbesondere aus Fig. 2 ersichtlich ist, ist nahe der Belüftungsöffnung 14 eine Drossel 28 im Stutzen 4 des Röhrenfedermanometers 1 angeordnet, die aus zwei Sinterdrosseln 29 und 30 und einert dazwischen befindlichen Quarzsandfüllung definierten Volumens besteht.

## Patentansprüche

1. Einrichtung zum Anzeigen des momentanen Kraftstoffverbrauchs eines Kraftfahrzeugs mit einem Ottomotor, mit einem Druckmeßwerk (1), das eine an das Ansaugrohr (13) des Motors angeschlossene Druckkammer (7) aufweist und Mitteln (14—27) zum Wirksamschalten des Druckmeßwerks im direkten Gang, dadurch gekennzeichnet, daß die Mittel zum Wirksamschalten des Druckmeßwerks eine Belüftungsöffnung (14, 27), die mit der Druckkammer (7) des Druckmeßwerks in Verbindung steht, und ein Klappankerrelais (16) aufweisen, dessen Erregerwicklung (19) zusammen mit einem diese im direkten Gang an eine Betriebsspannung (25) legenden Schalter (24) einen Stromkreis bildet und dessen Anker (20) mit einem Verschlußelement (15) für die Belüftungsöffnung (14, 27) derart zusammenwirkt, daß die Belüftungsöffnung bei Einlegen des direkten Gangs vom Verschlußelement verschlossen wird.

2. Einrichtung nach Anspruch 1, dadurch gekennzeichnet, daß eine Drossel (28) nahe der Belüftungsöffnung (14, 27) zwischen dieser und dem Ausgangsrohr (13) angeordnet ist.

3. Einrichtung nach Anspruch 2, dadurch gekennzeichnet, daß die Drossel (28) aus zwei im Abstand zueinander angeordneten Sinterdrosseln (29, 30) besteht, zwischen denen sich eine Quarzsandfüllung (31) definierten Volumens befindet.

4. Einrichtung nach einem der Ansprüche 1 bis 3, dadurch gekennzeichnet, daß das Verschlußelement (15) für die Belüftungsöffnung (14) in Form eines Stifts ausgebildet ist, der in einer den Erregerwicklungskern (18) durchsetzenden Bohrung (22) gelagert ist und auf seinem dem Anker (20) abgewandten Ende einen Verschlußkörper trägt.

5. Einrichtung nach einem der Ansprüche 1 bis 3, dadurch gekennzeichnet, daß der Anker (20) an seinem dem Drehpunkt abgewandten Ende einen Ansatz mit dem Verschlußkörper trägt.

6. Einrichtung nach einem der Ansprüche 1 bis 5, dadurch gekennzeichnet, daß das Druckmeßwerk (1) von einem Röhrenfedermanometer (1) gebildet ist, daß als Belüftungsöffnung im Stutzen (14) des Röhrenfedermanometers (1) eine in den Druckkanal mündende Bohrung (14) vorgesehen ist und daß das Klappankerrelais (16) am Stutzen (4) befestigt ist.

## Claims

1. Device for indicating the instantaneous fuel consumption of a motor vehicle having a petrol engine, with a pressure gauge (1) comprising a pressure chamber (7) connected to the suction pipe (13) of the engine, and with means (14—27) for making the pressure gauge operative in the direct drive condition, characterised in that the means for making the pressure gauge operative comprise a ventilation aperture (14, 27) connected to the pressure chamber (7) of the pressure gauge and also a hinged-armature relay (16) whose excitation winding (19), together with a switch (24) connecting same to an operating voltage (25) in the direct drive condition, forms an electrical circuit, and whose armature (20) co-operates with a closure element (15) for the ventilation aperture (14, 27) in such a manner that the ventilation aperture is closed by the closure element when direct drive is engaged.

2. Device according to claim 1, characterised in that a throttle (28) is arranged near the ventilation aperture (14, 27) between said aperture and the suction pipe (13).

3. Device according to claim 2, characterised in that the throttle (28) comprises two spaced-apart sinter throttle elements (29, 30) between which a quartz sand filling (31) of well-defined volume is provided.

4. Device according to one of claims 1 to 3, characterised in that the closure element (15) for the ventilation aperture (14) is made in the form of a pin which is mounted in a bore (22) extending through the excitation winding core (18) and which at its end remote from the armature (20) comprises a closure part.

5. Device according to one of claims 1 to 3, characterised in that the armature (20) at its end remote from the pivot point comprises an extension with the closure part.

6. Device according to one of claims 1 to 5, characterised in that the pressure gauge (1) is formed of a Bourdon tube pressure gauge (1), that a bore (14) opening into the pressure duct is provided as ventilation aperture in the connecting union (14) of the Bourdon tube pressure gauge (1), and that the hinged-armature relay (16) is secured on the connecting union (4).

## Revendications

1. Dispositif d'affichage de la consommation de carburant, à un instant considéré, d'un véhicule automobile muni d'un moteur à allumage par étincelle, comprenant un mécanisme (1) de mesure de la pression pourvu d'une chambre de pression (7) raccordée au tube d'aspiration (13) du moteur, ainsi que les moyens (14—27) pour mettre en fonction ledit mécanisme de mesure de la pression lorsqu'est enclenché le rapport direct, dispositif caractérisé par le fait que lesdits moyens d'enclenchement du mécanisme de mesure de la pression présentent un orifice d'évent (14, 27) qui communique avec la chambre de pression (7) dudit mécanisme de mesure de la pression, ainsi qu'un relais (16) à armature basculante, dont l'enroulement d'excitation (19) forme un circuit électrique comportant un interrupteur (24) appliquant une tension de service (25) audit enroulement lorsque le rapport direct est enclenché, et dont l'induit (20) coopère avec un élément (15) d'obturation dudit orifice d'évent (14, 27), de telle manière que cet orifice d'évent soit fermé par ledit élément d'obturation lorsqu'on enclenche le rapport direct.

2. Dispositif selon la revendication 1, caractérisé par le fait qu'un étranglement (28) est intercalé entre le tube d'aspiration (13) et l'orifice d'évent (14, 27), à proximité de ce dernier.

3. Dispositif selon la revendication 2, caractérisé par le fait que l'étranglement (28) se compose de deux étranglements frittés (29, 30) qui sont disposés à distance l'un de l'autre et entre lesquels se trouve une garniture (31) en sable siliceux de volume déterminé.

4. Dispositif selon l'une quelconque des revendications 1 à 3, caractérisé par le fait que l'élément (15) d'obturation de l'orifice d'évent (14) est réalisé sous la forme d'un pointeau qui est logé dans un perçage (22) traversant de part en part le noyau (18) de l'enroulement d'excitation, et porte un corps obturateur à son extrémité tournée à l'écart de l'induit (20).

5. Dispositif selon l'une quelconque des revendications 1 à 3, caractérisé par le fait que l'induit (20) comporte, à son extrémité tournée à l'écart du point de rotation, un appendice sur lequel se trouve le corps obturateur.

6. Dispositif selon l'une quelconque des revendications 1 à 5, caractérisé par le fait que le mécanisme (1) de mesure de la pression est formé par un manomètre (1) à tubulure élastique; par le fait que l'orifice d'évent ménagé dans le raccord (4) du manomètre (1) à tubulure élastique consiste en un perçage (14) débouchant dans le canal de pression; et par le fait que le relais (16) à armature basculante est fixé audit raccord (4).

0 024 742

# Fig. 1

# Fig. 2